# EUROPEAN PATENT APPLICATION

(11) **EP 2 660 698 A1**
(43) Date of publication of application: **06.11.2013**
(21) Application number: 12166784.4
(22) Date of filing: 04.05.2012
(51) Int. Cl.: G06F 3/048

(54) **Selectable object display method and apparatus**

(71) Applicant: BlackBerry Limited, Waterloo, ON N2L 3W8 (CA)
(72) Inventor: Speranza, Roberto, Mississauga, Ontario L4W 5P1 (CA); Williams, Robert Paul, Mississauga, Ontario L4W 0B5 (CA)
(74) Representative: Fennell, Gareth Charles

(57) **Abstract**

A method includes displaying a selectable object at a first position on a display of an electronic device, detecting activity near the selectable object, and, in response to detecting the activity, discontinuing displaying the selectable object at the first position and displaying the selectable object at a second position.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified based on the functions and operations being performed. With continued demand for decreased size of portable electronic devices, touch-sensitive displays continue to decrease in size.

Improvements in devices with touch-sensitive displays are desirable.

### Brief Description of the Drawings

FIG. 1 is a block diagram of a portable electronic device in accordance with the disclosure.

FIG. 2, FIG. 4, FIG. 5, FIG. 6, FIG. 7, FIG. 8, FIG. 9, FIG. 10, FIG. 11, and FIG. 12 illustrate examples of displaying selectable objects on an electronic device in accordance with the disclosure.

FIG. 3 is a flowchart illustrating a method of displaying a selectable object in accordance with the disclosure.

### Detailed Description

The following describes an apparatus for and method of selectable object display. The apparatus may be an electronic device. The electronic device displays a selectable object. The selectable object may be a movable object that may be manually or automatically moved or both. The selectable object may be a representation of an input device such as a mouse, a keyboard, or a trackpad. Alternatively, the selectable object may be an application or any other displayed object. The electronic device detects an activity near the selectable object and, in response, moves the selectable object away from the activity. The activity may be a touch detected on a touch-sensitive display of the electronic device, text input to the electronic device, or any other detected input or result of detected input.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without wireless communication capabilities, such as handheld electronic games, digital photograph albums, digital cameras, media players, e-book readers, and so forth. Examples of non portable electronic devices include desktop computers, electronic white boards, smart boards utilized for collaboration, built-in monitors or displays in furniture or appliances, and so forth.

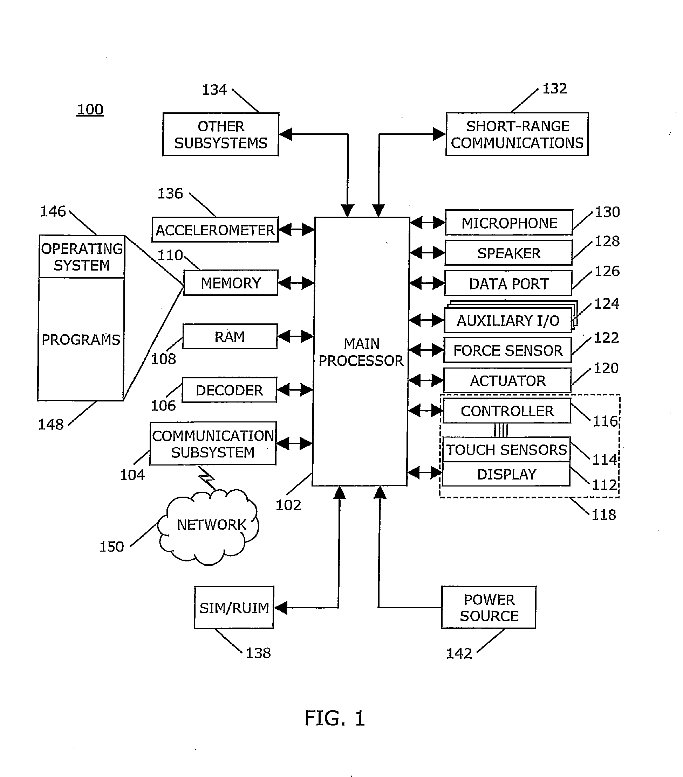

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A touch may be detected from any suitable input member, such as a finger, thumb, appendage, or other objects, for example,
a stylus (active or passive), pen, or other pointer, based on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

Electronic devices, such as electronic devices that include touch-sensitive displays, display selectable objects. A selectable object may be a representation of an input device, a plug-in, an add-on, an accessory, an input interface, and so forth. The input device may be a mouse, a keyboard, a trackpad, or any other input device. Electronic devices as disclosed herein detect an activity near the selectable object and, in response, move the selectable object away from the activity. The activity may be near the selectable object when a location of the activity is within a threshold distance of the selectable object, when the activity is approaching the selectable object, when the activity moves from an origin location to a destination location that is within a threshold distance of the selectable object, when a gesture or a part of a gesture is detected within a threshold distance of the selectable object, when the activity is moving near the selectable object, when an input location is within a threshold distance of the selectable object, when the activity is within a threshold time of being within a threshold distance of the selectable object, and so forth. The selectable object may be moved by discontinuing display of the selectable object at a current position and displaying the selectable object at another position. The activity may be unrelated to the selectable object. For example, the activity may be unrelated to the selectable object when the activity is related to an application, plug-in, add-on, or accessory that is not related to, part of, displays, or calls on the selectable object, when the activity is related to the operating system 146, when the activity is not an interaction with the selectable object, when the activity is not a selection of the selectable object, and so forth. Moving the selectable object in response to the activity may facilitate viewing or accessing a display area or objects displayed at the position of the selectable object prior to the move.

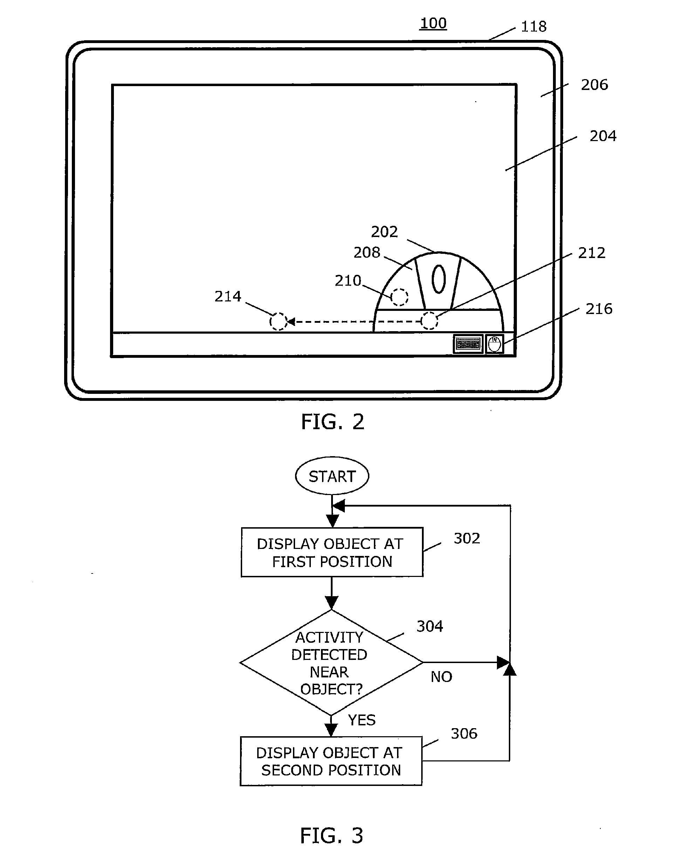

A selectable object 202 is displayed on the touch-sensitive display 118 of the electronic device 100 as shown in the example of FIG. 2. The example touch-sensitive display 118 includes a display area 204 and a non-display area 206.

The example selectable object 202 is a representation of a mouse input device. The selectable object 202 includes selection options 208. Detection of input associated with the selection options 208 results in a mouse click or scrolling. For example, detection of a touch at touch location 210 results in a mouse left-click. Detection of a touch or multiple touches associated with the selection options 208 may result in performing a function, e.g., a left-click, a right-click, a middle-click, scrolling, a single click, a double click, dragging, selecting, keyboard input, information input, and so forth. The selectable object 202 may be manually moved in response to the detection of input related to or causing movement of the selectable object. For example, the detection of a touch that moves from an origin touch location 212 to a destination touch location 214 moves the selectable object 202. The selectable object 202 is moved by discontinuing display of the selectable object 202 at the original position and displaying the object at another position associated with a new input location, such as a touch location. Alternatively, moving the selectable object 202 may include displaying the selectable object 202 at intermediate positions between the current position and the other position to simulate dragging, movement, and so forth.

The electronic device 100 of the example of FIG. 2 includes selection options 216 for selectively displaying the selectable object 202 and selectively displaying a representation of a keyboard. The selectable object 202 may be associated with an application for displaying and accessing a user interface of a second electronic device, e.g., a remote electronic device such as a personal computer, a tablet computer, a mobile computing device, and so forth. Detection of input associated with the selectable object 202 results in input being sent to the second electronic device. For example, a touch detected at touch location 210 results in a left-click command being sent to the second electronic device.

A flowchart illustrating a method of displaying a selectable object is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, which may be a non-transitory or tangible storage medium. For example, the computer-readable storage medium is not a propagating signal.

The selectable object 202 is displayed 302 at a first position on the touch-sensitive display 118 of the electronic device 100. The selectable object 202 may be displayed with any level of opacity, such as substantially transparent, substantially opaque, or any other level. The first position may be any position on the touch-sensitive display 118, such as lower-right, upper-left, middle, and so forth. The selectable object 202 is optionally displayed in the first position in response to input selecting or identifying the first position.

When activity near the selectable object 202 is detected 304 by the electronic device 100, the selectable object 202 is automatically displayed 306 at a second position. The electronic device 100 may discontinue displaying the selectable object 202 at the first position. Thus, the selectable object 202 may be moved from the first position to the second position. For each of the examples described herein, displaying the selectable object 202 at the second position and discontinuing display of the selectable object 202 at the first position may include simultaneously discontinuing the display at the first position and displaying at the second position, sequentially discontinuing the display at the first position and displaying at the second position, sequentially displaying at the second position and discontinuing the display at the first position, displaying an animation of the selectable object 202 moving from the first position to the second position, displaying the selectable object 202 at intermediate positions between the first position and the second position, displaying effects such as fading out of the selectable object 202, highlighting the selectable object 202, and so forth. The selectable object 202 may be stationary when the activity near the selectable object 202 is not detected and/or when activity is detected that is not near the selectable object. For example, the selectable object 202 does not move when no activity is detected, when activity that is not within a threshold distance of the selectable object 202 is detected, e.g., activity that is away from the selectable object, and so forth.

The activity may be detection of a touch on the touch-sensitive display 118, detection of a touch event on the touch-sensitive display 118, detection of a touch or other input in a three-dimensional space, detection of input from a physical or virtual keyboard, detection of input from a mouse, detection of input from a peripheral coupled to the electronic device 100, detection of a gesture or part of a gesture, or detection of any other input. Alternatively, the activity may be movement of another object displayed on the touch-sensitive display 118, movement of an object or element as a result of input detected by the electronic device 100, activity of an application executing on the electronic device 100, and so forth. The activity may be initiated remotely, such as input received from a remote electronic device. The activity may be unrelated to the selectable object 202. For example, the electronic device 100 determines that the activity is not an attempt to select the selection options 208 of the selectable object 202, is not an attempt to move the selectable object 202, and so forth.

The activity may be near the selectable object 202 when a location of the activity is within a threshold distance of the selectable object 202, when the activity is approaching the selectable object 202, when the activity moves from an origin location to a destination location that is within a threshold distance of the selectable object 202, when a gesture or a part of a gesture is detected within a threshold distance of the selectable object, when the activity is moving near the selectable object, when an input location is within a threshold distance of the selectable object 202, when the activity is within a threshold time of being within a threshold distance of the selectable object 202 whether or not the activity actually occurs within the threshold distance, and so forth. Optionally, the activity is near the selectable object 202 when the activity is within a threshold distance of the selectable object 202 and is outside of a displayed area of the selectable object 202. The threshold distance may be a distance from the selectable object 202 that is greater than zero or may be zero. The threshold distance may be a distance from a displayed area of the selectable object 202, a distance from a center of the selectable object 202, a distance from the selection option 208 of the selectable object 202, a distance from a selection area of the selectable object 202, and so forth. The activity may be near the selectable object 202 in any dimension. For example, the touch-sensitive display 118 may have a first dimension, e.g., a width, and a second dimension, e.g., a height, and may detect input in the first dimension, the second dimension, and a third dimension. Detection of an input near the selectable object 202 in the third dimension may result in moving the selectable object 202. The activity may be located in a non-display area, such as the non-display area 206 such as shown in FIG. 2.

Optionally, an activity is approaching the selectable object 202 if the activity includes detection of input that is moving toward the selectable object 202. The electronic device 100 may determine that the activity is approaching the selectable object 202 based on one or more of a direction of movement, a velocity of movement, an acceleration of the movement, a distance of the movement from the selectable object 202, and so forth. Optionally, the threshold distance from the selectable object 202 may be determined based on one or more of the velocity of the movement and the acceleration of the movement. For example, the threshold distance may optionally be increased as one or both of velocity of movement and acceleration of movement are increased or detected.

The second position may be identified based on the activity. The second position may be identified to be located distant from the activity, away from a destination of the activity, and so forth. The destination of the activity may be estimated based on one or more of a velocity of movement, a direction of movement, an acceleration of movement, and so forth. For example, the second position may be selected to be away from the activity and the destination of the activity to reduce further movement of the selectable object 202 while facilitating selection of the selection options 208 of the selectable object 202. The second position may be identified as a position substantially opposite a location of the activity, e.g., a position horizontally opposite, vertically opposite, in an opposite corner, an opposite diagonal corner, an opposite horizontal corner, an opposite vertical corner, an opposite edge, and so forth. Additionally or alternatively, the second position may be identified as a position substantially opposite the first position, e.g., a position within an opposing one half of the touch-sensitive display 118, a position within an opposing one quarter of the touch-sensitive display 118, and so forth. The second position may be selected from a plurality of preset location options. Alternatively, the second position may be selected to be a predetermined distance from the first position.

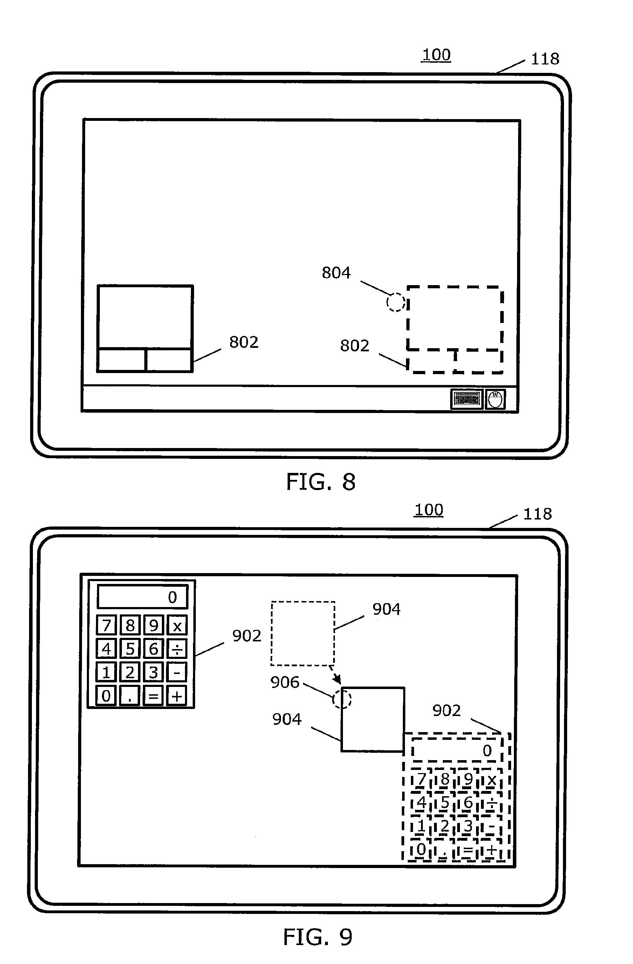

The method of FIG. 3 may be a part of the operating system 146 of the electronic device 100, part of one of the programs 148 of the electronic device 100, or part of any other element of the electronic device 100. Although the flowchart of FIG. 3 is described with respect to a selectable object 202 that is a representation of an input device, the method illustrated in FIG. 3 may be applied to any selectable object, such as the selectable object 802 that is a representation of a virtual trackpad in the example of FIG. 8 and the selectable object 902 representing a calculator in the example of FIG. 9.

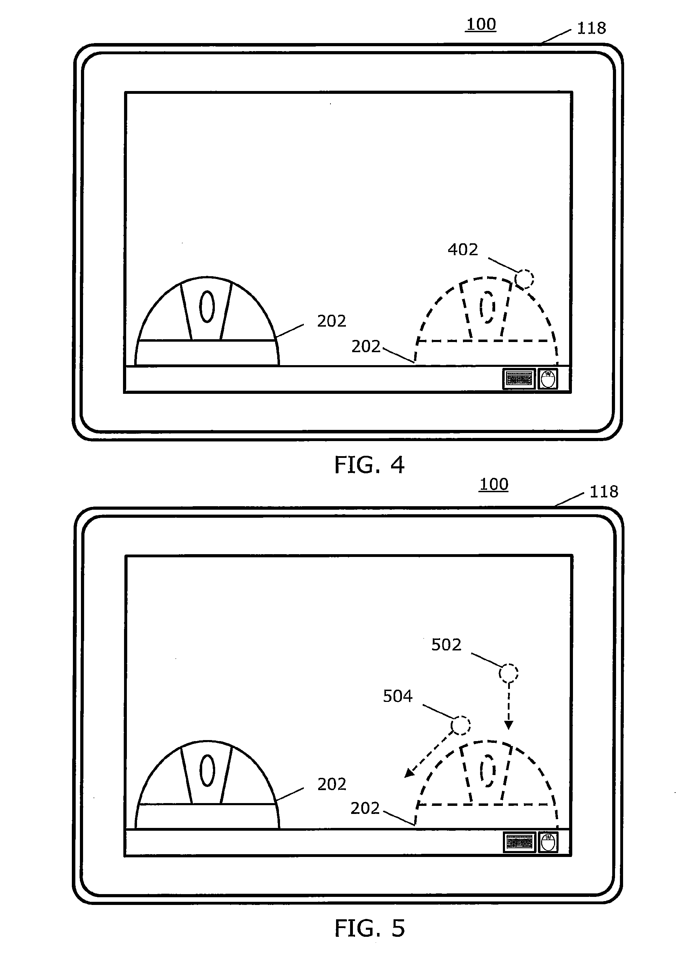

In the example of FIG. 4, the selectable object 202, shown in dashed lines, is initially displayed at a position near the lower right corner on the touch-sensitive display 118 and is automatically moved to a position to the left of the initial position in response to detection of a touch at a touch location 402 near the initial position of the selectable object 202. In the example of FIG. 4, the touch at the touch location 402 is an activity that is near the selectable object 202. The selectable object 202 in the example of FIG. 4 is a representation of a mouse as described in association with FIG. 2. The selectable object 202 is automatically moved to the left from the initial position to the position by discontinuing display of the selectable object 202 at the initial position and displaying the selectable object 202, shown in solid lines, at the position in response to the activity. The touch location 402 at last partially intersects the displayed area of the selectable object 202 but a majority of the touch location 402 is outside of the displayed area of the selectable object 202 in this example.

In the example of FIG. 5, the selectable object 202, shown in dashed lines, is displayed at an initial position near the lower right corner on the touch-sensitive display 118 and is automatically moved to the left to a second position, where the selectable object 202 is shown in solid lines, in response to detection of a touch that originates at touch location 502 or, alternatively, a touch that originates at touch location 504. The selectable object 202 of FIG. 5 is a representation of a mouse as described in association with FIG. 2 in this example. The selectable object 202 is automatically moved from the initial position to the second position by discontinuing display of the selectable object 202 at the first position and displaying the selectable object 202, shown in solid lines, at the second position on the left.

The touch that originates at touch location 502 and moves in a direction toward the selectable object 202,while at its initial position as shown in dashed lines, is an activity that is near the selectable object 202 in this example. The touch is near the selectable objection 202 when the touch moves to within a threshold distance of the selectable object 202. Optionally, when the velocity and direction of the touch are such that the touch will be within a threshold distance of the selectable object 202, the selectable object 202 is automatically moved. For example, the activity may be considered near if it will imminently, or within a threshold time period, be within the threshold distance of the selectable object 202. One or more of a current location, direction, velocity, and acceleration of the touch may be utilized to determine that the touch may be within the threshold distance within the threshold period of time. The electronic device 100 automatically moves the selectable object 202 to the second position, where the selectable object 202 is shown in solid lines in this example.

In the example of FIG. 5, the touch that originates at the other touch location 504 is an activity and moves near, but would not enter, the displayed area of the selectable object 202 shown in dashed lines at the initial position. In this example, when the touch moves near the selectable object 202 displayed at the initial position and within a threshold distance of the selectable object 202, the electronic device 100 automatically moves the selectable object 202 to the left to the position shown in solid lines.

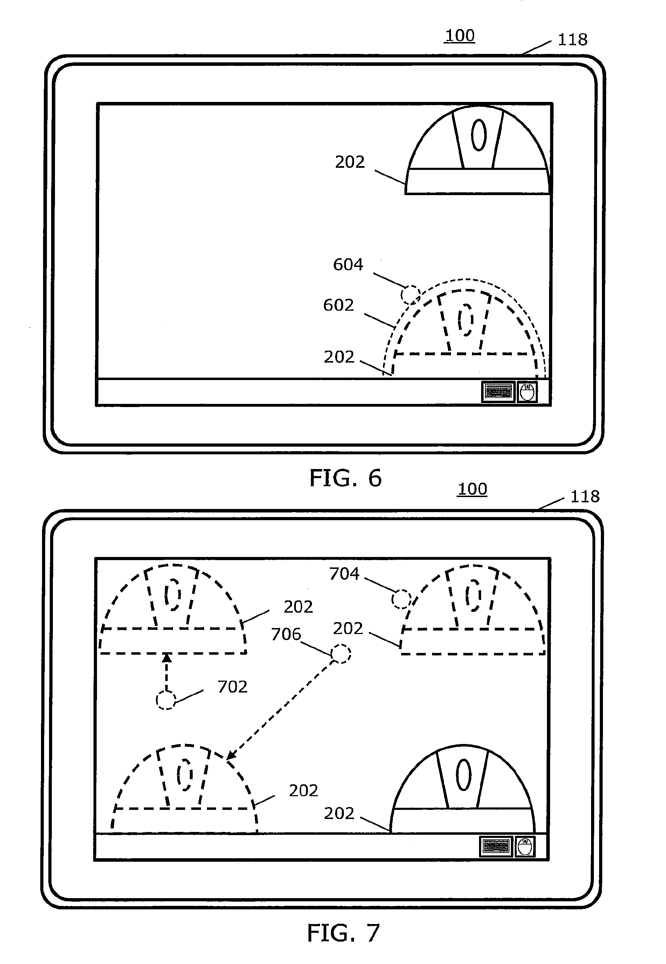

In the example of FIG. 6, the selectable object 202, shown in dashed lines, is displayed at an initial position near the lower right corner on the touch-sensitive display 118 and is automatically moved up to a position where the selectable object 202 is shown in solid lines in response to detection of a touch at a touch location 604 that is within a threshold distance of the selectable object 202. In the example of FIG. 6, the touch at the touch location 604 is an activity that is near the selectable object 202. The threshold distance is illustrated by the boundary 602 that is not displayed on the touch-sensitive display 118 in this example. Optionally, a representation of the threshold distance may be displayed. The touch location 604 is an area that is at least partially within the threshold distance of the selectable object 202 in this example.

In the example of FIG. 7, the selectable object 202, shown in dashed lines, is initially displayed at a position near the upper left corner on the touch-sensitive display 118 and is automatically moved to the right to a position where the selectable object 202 is shown in dashed lines in response to detection of a touch that approaches the selectable object 202 from the touch location 702 on the left side of the device 100. The selectable object 202, shown in dashed lines, is automatically moved down and to the left to a third position near the lower left corner in response to detection of a touch at the touch location 704 in the upper right quadrant in this example. The selectable object 202 is automatically moved to the right to a fourth position where the selectable object 202 is shown in solid lines in response to detection of a touch that moves in a direction toward the selectable object 202 from touch location 706, while the selectable object 202 is in the lower left corner, at a pace that indicates imminent location within the threshold distance and threshold time. In the example of FIG. 7, the touches at the touch locations 702, 704, 706 are activities that are near the respective positions of the selectable object 202. The touches and movements may occur in succession such that the electronic device 100 repeatedly moves the selectable object 202 away from the various touches at touch locations 702, 704, 706. In this example, the electronic device 100 identifies the third position as a position in a quadrant of the touch-sensitive display 118 that is opposite a quadrant containing the touch location 704.

In the example of FIG. 8, the selectable object 202 is initially displayed at a position near the lower right corner on the touch-sensitive display 118, wherein the selectable object 202 is shown in dashed lines, and is automatically moved to the left to a second position where the selectable object 202 is shown in solid lines in response to detection of a touch at a touch location 804 near the selectable object 802 while in its initial position. In the example of FIG. 8, the touch at the touch location 804 is an activity that is near the selectable object 802. The selectable object 802 of FIG. 8 is a representation of a trackpad displayed on the touch-sensitive display 118.

In the example of FIG. 9, the selectable object 902 is initially displayed as shown in dashed lines at a position near the lower right corner on the touch-sensitive display 118 and is automatically moved up and to the left to a second position, where the selectable object 902 is shown in solid lines, in response to detection of another object 904 near the selectable object 902. In the example of FIG. 9, the movement of the object 904 by the touch at the touch location 906 is an activity that is near the selectable object 902. The selectable object 902 of FIG. 9 is representation of a calculator for a calculator application in this example. The display of the calculator representation includes selection options for inputting information to the calculator application in this example. The object 904 may be an icon, an image, another selectable object, a movable object, and so forth. The object 904 is initially displayed at a first position and shown in dashed lines and is moved down and to the right to a position, where the selectable object 902 is shown in solid lines, as a result of a touch that manually moves the object 904 to the touch location 906 in this example. The touch location 906 is away from the selectable object 902 at the first position in this example.

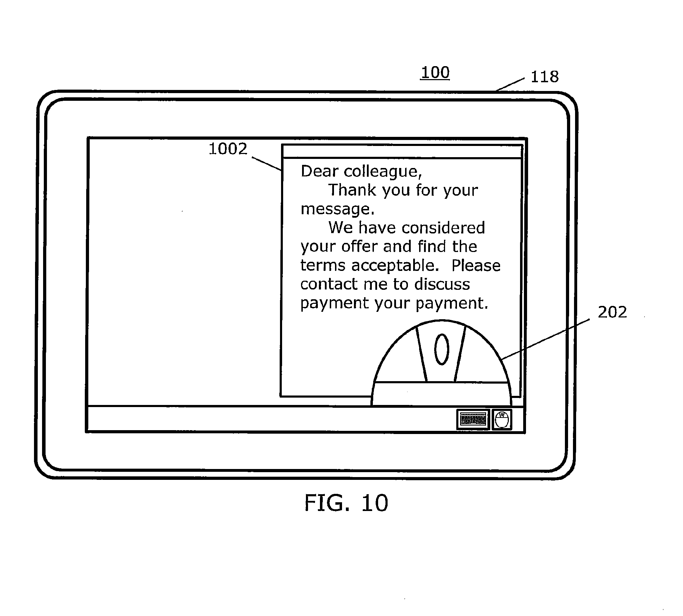

In the example of FIG. 10, the selectable object 202 is initially displayed at a position near the lower right corner on the touch-sensitive display 118. A displayed interface 1002 of an application is also displayed on the touch-sensitive display 118. The displayed interface 1002 displays information input to the electronic device 100 in this example. Optionally, the application may display any other information. The application may be any type of application, such as a word processing application, an email application, an image manipulation application, and so forth.

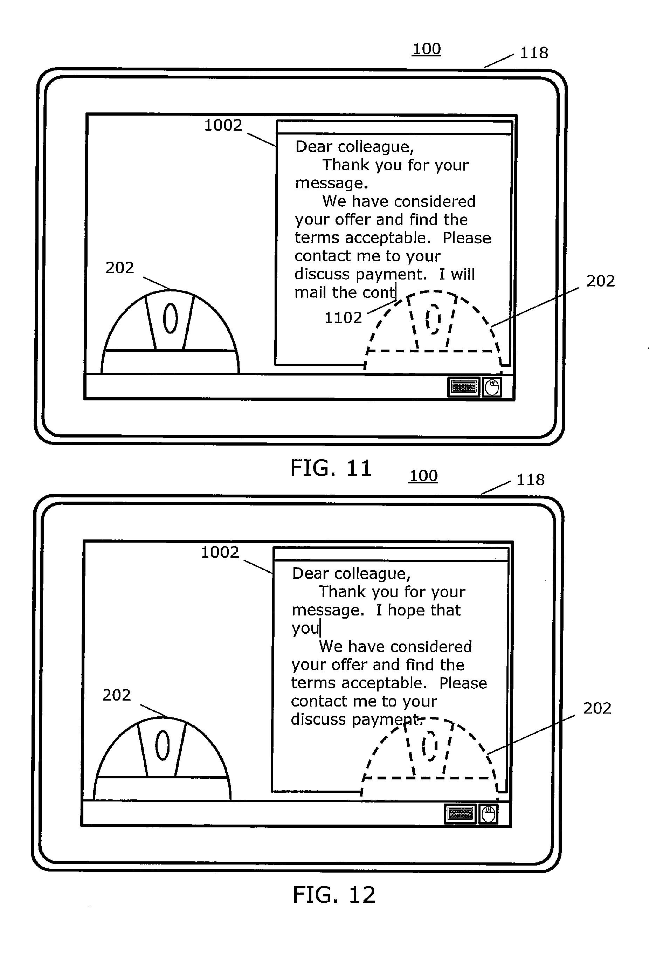

In the example of FIG. 11, the selectable object 202 is moved to the left from the initial position of FIG. 10 where the selectable object 202 is shown in dashed lines to a second position, where the selectable object 202 is shown in solid lines, in response to detection of the information input location 1102 near the selectable object 202. Input from a physical or virtual keyboard is detected by the electronic device 100, which displays the information "I will mail the cont" in this example. The input of the letter "t" of the partial word "cont" causes the information input location 1104 to move near the selectable object 202 in this example. In response to the activity of movement of the information input location 1104, the selectable object 202 is automatically moved to the left to the second position where the selectable object 202 is shown in solid lines. Alternatively, the shown in solid lines when the information of the application is near the selectable object 202. For example, the electronic device automatically moves the selectable object 202 to the second position in response to detecting that the activity that is the input of the letter "t" of the partial word "cont" in this example. The information input location 1104 may be a cursor, a pointer, an indicator, and so forth. Optionally, the information input location 1104 may not be displayed.

In the example of FIG. 12, the selectable object 202 is moved to the left from the initial position of FIG. 10 where the selectable object 202 is shown in dashed lines to a second position, where the selectable object 202 is shown in solid lines, in response to detecting that the information of the application is displayed near the selectable object 202. Input from a physical or virtual keyboard is detected by the electronic device 100, which displays the information. "I hope that you" in this example. The input of the letter "u" of the word "you" causes the word "you" to exceed the length of the line, and the word is wrapped to the next line of information moving all following information down one fine. When the information of the application is moved down one line, the information is displayed near and eventually within the displayed area of the selectable object 202 when at the initial position. In the example of FIG. 12, the movement of the information is an activity that is near the selectable object 202. The selectable object 202 is automatically moved to the second position where the selectable object 202 is shown in solid lines in response to the information moving to a display location near the selectable object 202 as a result of receiving the additional information.

While touch locations 210, 212, 214, 402, 502, 504, 604, 702, 704, 706, 804, and 906 are illustrated as circular touch areas, a touch location may be a touch area of any dimension, a single point, multiple points, and so forth. For any of the foregoing examples, when the activity is a touch, the touch may be near a selectable object when a point of the touch is near the selectable object, when a part of a touch area is near the selectable object, when the entire touch area is near the selectable object, and so forth.

Moving a selectable object in response to detecting an activity, as disclosed herein, facilitates uninterrupted display of information on and interaction with an electronic device. The selectable object may be moved to prevent the selectable object interfering with operations on a display of an electronic device, such as interaction with applications, interaction with operating system operations, and so forth. For example, portable electronic devices often include displays of a limited size, movement of the selectable object facilitates efficient utilization of the limited display by facilitating display of the selectable object without interference with other activities on the display of the portable electronic device.

While the electronic device 100 includes the touch-sensitive display 118, any other type of display may be utilized. Optionally, the electronic device 100 may not include touch detection. The terms left, right, up, down, middle, and so forth are utilized for the purpose of reference and are not otherwise limiting.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
displaying a selectable object at a first position on a display of an electronic device;
detecting activity near the selectable object;
in response to detecting the activity, discontinuing displaying the selectable object at the first position and displaying the selectable object at a second position.

2. The method according to claim 1, wherein the activity is a detection of input.

3. The method according to claim 1, wherein the display is a touch-sensitive display, and the activity is detection of a touch on the touch-sensitive display.

4. The method according to claim 1, wherein the selectable object is a representation of an input device.

5. The method according to claim 4, wherein the selectable object is a representation of a mouse or a keyboard.

6. The method according to claim 1, wherein the activity is near the selectable object when the activity is approaching the selectable object.

7. The method according to claim 1, further comprising detecting a touch associated with the selectable object and, in response to the touch, performing an action associated with the selectable object.

8. The method according to claim 1, wherein the activity is near the selectable object when the activity is within a threshold distance from the selectable object.

9. The method according to claim 1, wherein the second position is away from the activity.

10. The method according to claim 1, wherein the activity is near the selectable object when the activity is moving near the selectable object.

11. The method according to claim 1, wherein the second position is identified based on the activity.

12. A computer-readable storage medium having computer-readable code executable by at least one processor of the electronic device to perform the method of claim 1.

13. An electronic device comprising:
a display;
a processor configured to:
display a selectable object at a first position on a display of an electronic device;
detect activity near the selectable object;
in response to detecting the activity, discontinue displaying the selectable object at the first position and display the selectable object at a second position.

14. The electronic device according to claim 13, wherein the display is a touch-sensitive display and the activity comprises a detected touch on the touch-sensitive display.

15. The electronic device according to claim 13, wherein the display has a first dimension and a second dimension and the activity is near the selectable object in a third dimension.

## Amended claims

### Amended claims in accordance with Rule 137(2) EPC.

**1.** A method comprising:
displaying a selectable object (202, 802, 902) at a first position on a display (112) of an electronic device (100);
detecting activity near the selectable object, wherein the activity is not an attempt to select the selectable object;
in response to detecting the activity, discontinuing displaying the selectable object at the first position and displaying the selectable object at a second position.

**2.** The method according to claim 1, wherein the activity is a detection of input.

**3.** The method according to claim 1, wherein the display (112) is a touch-sensitive display, and the activity is detection of a touch on the touch-sensitive display.

**4.** The method according to claim 1, wherein the selectable object is a representation of an input device.

**5.** The method according to claim 1, wherein the activity near the selectable object is input of or movement of text near the selectable object.

**6.** The method according to claim 1, wherein the activity is near the selectable object when the activity is approaching the selectable object.

**7.** The method according to claim 1, further comprising detecting a touch associated with the selectable object and, in response to the touch, performing an action associated with the selectable object.

**8.** The method according to claim 1, wherein the activity is near the selectable object when the activity is within a threshold distance from the selectable object.

**9.** The method according to claim 1, wherein the first position and the activity are in a first half of the display and the second position is in an opposing half of the display.

**10.** The method according to claim 1, wherein the activity is near the selectable object when the activity is moving near the selectable object.

**11.** The method according to claim 1, wherein the first position is in a first corner of the display and the second position is in a second corner of the display.

**12.** A computer-readable storage medium having computer-readable code executable by at least one processor of the electronic device to perform the method of any of claims 1 to 11.

**13.** An electronic device (100) comprising:
a display (112);
a processor configured to:
display a selectable object (202, 802, 902) at a first position on a display of an electronic device;
detect activity near the selectable object, wherein the activity is not an attempt to select the selectable object;
in response to detecting the activity, discontinue displaying the selectable object at the first position and display the selectable object at a second position.

**14.** The electronic device according to claim 13, wherein the display (112) is a touch-sensitive display and the activity comprises a detected touch on the touch-sensitive display.

**15.** The electronic device according to claim 13, wherein the display has a first dimension and a second dimension and the activity is near the selectable object in a third dimension.

## Amended claims

### Amended claims in accordance with Rule 137(2) EPC.

**1.** A method comprising:
displaying a selectable object (202, 802, 902) at a first position on a display (112) of an electronic device (100);
detecting activity near the selectable object, wherein the activity is input of or movement of text near the selectable object;
in response to detecting the activity, discontinuing displaying the selectable object at the first position and displaying the selectable object at a second position.

**2.** The method according to claim 1, wherein the activity is a detection of input.

**3.** The method according to claim 1, wherein the display (112) is a touch-sensitive display, and the activity is detection of a touch on the touch-sensitive display.

**4.** The method according to claim 1, wherein the selectable object is a representation of an input device.

**5.** The method according to claim 1, further comprising performing a function for the selectable object in response to detecting an attempt to touch the selectable object.

**6.** The method according to claim 1, wherein the activity is near the selectable object when the activity is approaching the selectable object.

**7.** The method according to claim 1, further comprising detecting a touch associated with the selectable object and, in response to the touch, performing an action associated with the selectable object.

**8.** The method according to claim 1, wherein the activity is near the selectable object when the activity is within a threshold distance from the selectable object.

**9.** The method according to claim 1, wherein the first position and the activity are in a first half of the display and the second position is in an opposing half of the display.

**10.** The method according to claim 1, wherein the activity is near the selectable object when the activity is moving near the selectable object.

**11.** The method according to claim 1, wherein the first position is in a first corner of the display and the second position is in a second corner of the display.

**12.** A computer-readable storage medium having computer-readable code executable by at least one processor of the electronic device to perform the method of any of claims 1 to 11.

**13.** An electronic device (100) comprising:
a display (112);
a processor configured to:
display a selectable object (202, 802, 902) at a first position on a display of an electronic device;
detect activity near the selectable object, wherein the activity is input of or movement of text near the selectable object;
in response to detecting the activity, discontinue displaying the selectable object at the first position and display the selectable object at a second position.

**14.** The electronic device according to claim 13, wherein the display (112) is a touch-sensitive display and the activity comprises a detected touch on the touch-sensitive display.

**15.** The electronic device according to claim 13, wherein the display has a first dimension and a second dimension and the activity is near the selectable object in a third dimension.
